# EUROPEAN PATENT SPECIFICATION

(11) **EP 0 569 911 B1**
(45) Date of publication and mention of the grant of the patent: **24.04.1996**
(21) Application number: 93107581.6
(22) Date of filing: 10.05.1993
(51) Int. Cl.: B01D 33/03, B01D 33/044

(54) **Dynamic filter for treating contaminated fluids**
Dynamischer Filter zur Behandlung von kontaminierten Fluiden
Dispositif de filtrage dynamique pour le traitement de fluides contaminés

(30) Priority: 14.05.1992 IT MO920071
(43) Date of publication of application: 18.11.1993
(73) Proprietor: TECNOFORME S.p.A., I-41015 Nonantola, Modena (IT)
(72) Inventor: Bicocchi, Silvano, I-41015 Nonantola, Modena (IT)
(74) Representative: Modiano, Guido, Dr.-Ing.

(56) References cited:
- DE-A- 2 716 231
- US-A- 2 104 785
- US-A- 2 867 330
- US-A- 3 138 088
- US-A- 4 350 591

## Description

The present invention relates to a dynamic filter for treating contaminated fluids.

Filters have long been used for the treatment of fluids, normally in the liquid state, containing solid-phase contaminants, so as to recover said fluids in the original state, i.e. purified, and at the same time to eliminate the impurities present therein due to industrial processes.

Said known filters are essentially divided into the following categories: so-called flat filters and drum filters.

The former are constituted by flat frames, with a movable or fixed "bed", which can operate both at atmospheric pressure and under suction pressure and on which a ribbon of filtering material, usually paper-like, with preset porosity, is unrolled; these flat filters are placed downstream of an outlet for the fluids to be treated, and each portion of ribbon saturated with impurities is made to advance towards a container and is accumulated in it together with the trapped impurities.

Drum filters are instead constituted by a cylindrical grid-like frame supported so that its axis is horizontal inside a closed box-like structure, wherein a sub-atmospheric pressure is normally provided; a sequence of portions of a filtering ribbon rests on the cylindrical frame, and said ribbon is progressively unwound from a roll and is accumulated, at the end of the cycle, in an appropriate container, once again together with the collected material to be eliminated.

Known filters offer a performance which on the average is satisfactory: however, they are affected by some drawbacks which considerably limit their overall efficiency.

In particular, in moving-bed flat filters, the weight of the accumulated material and the impact force of the cascade of liquid to be treated cause the filtering ribbon to contract bilaterally, allowing the overflow of the accumulated dirt, which thus falls into the underlying vat for the collection of the purified liquid recontaminating it, even if only partially.

Flat filters furthermore require large treatment surfaces, with consequent considerable bulks of the structure and the need to use large amounts of filtering material; in addition to this, they suffer from frequent clogging due to the stratified accumulation of the impurities by deposition.

Furthermore, storage of the used ribbon together with the collected impurities produces great difficulty in the disposal of said impurities, since currently applicable statutory provisions on the subject are very strict and prescribe separation of the materials to be sent to landfills.

This further problem also arises in drum filters, which require the creation of the sub-atmospheric pressure required to cause the fluid to be treated to be aspirated centripetally in the cylindrical frame, thus passing through the portion of filtering ribbon, leaving the impurities on the outside of said ribbon and being collected by a pipe which is substantially concentric to the drum once it has been filtered.

The production of this sub-atmospheric pressure is very troublesome and uneconomical, and the obtainable absolute values are modest, thus negatively affecting the overall efficiency of these kinds of filters.

Furthermore, each portion of filtering ribbon tends to clog very easily, since a layer of said impurities, known as "cake", tends to form on it in an uncontrolled and uneven manner; furthermore, every time the ribbon portions are changed, it is first of all indispensable to return the box-like structure to normal atmospheric pressure in order to prevent the force of adhesion between the ribbon and the cylindrical frame from tearing the ribbon in the attempt to make it slide.

The technical aim of the present invention is to solve the above described problems of the known art by providing a dynamic filter for the treatment of contaminated fluids which: allows to separate the used and depleted ribbon and the contaminating material collected thereby; controls the forming of said cake, maintaining the filtering power of the ribbon unchanged until the fibers are saturated; has a considerably greater filtering power, for an equal active surface, than filters hitherto known, providing a significant saving of the filtering element, making it last longer even if used in high contamination density conditions.

A further object of the present invention is to provide a dynamic filter for the treatment of contaminated fluids which allows, by means of a single structure, to treat fluids both in the liquid state and in the gaseous state without having to resort, for each one of said states, to a specifically designed and manufactured filter.

This aim and these objects are achieved by a dynamic filter for treating fluids containing solid-phase contaminants, comprising an impurity collection vat supporting, on its upper mouth and with resting means interposed, a substantially flattened lattice which is connected, by virtue of related elements, to a vibrating unit in an upward region and supports, in a downward region, a frame for supporting, inside the vat and with interposed elastic damping elements, a supporting element on a face whereof a ribbon-like filtering element of preset porosity can be wound so that it rests thereon and is moved bidirectionally by related elements; said collection vat being provided with elements for accumulating and conveying outside the collected impurities.

Preferred embodiments of the dynamic filter can be found in the dependent claims.

Further characteristics and advantages of the present invention will become apparent from the following detailed description of a preferred embodiment thereof, illustrated only by way of non-limitative example in the accompanying drawings, wherein:
figure 1 is a schematic lateral sectional view of a dynamic filter according to the present invention;
figure 2 is a schematic longitudinal sectional view thereof;
figure 3 is an enlarged-scale detail view of an elastic damping element; and
figure 4 is another sectional side view of a possible further embodiment of the present invention.

With reference to the drawings, the reference numeral 1 generally designates a dynamic filter for treating contaminated fluids, comprising an impurity collection vat 2 on the upper mouth whereof a flattened lattice 3 is supported and rests on the edges 2a of the vat 2 with resting means 4 interposed.

The lattice 3 is connected, in an upward region, to a vibrating unit 5 and supports, in a downward region, a frame 6 supporting a drum 7 which has a horizontal axis and on which a filtering ribbon 8, preferably of a conventional type, can be wound.

Said ribbon is movable bidirectionally by virtue of the action of respective elements 9 which are essentially constituted by a pair of reels 10 located on said lattice 3; normally, at least one of said reels is motorized, whereas the other one is a driven roll; however, in order to provide bidirectional movement, motorization affects both reels.

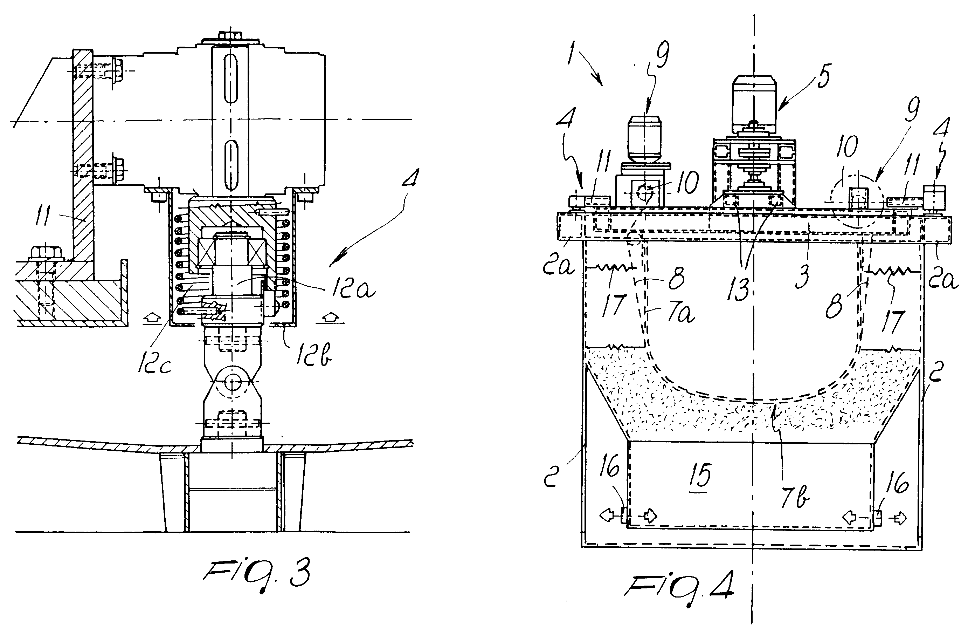

The drum 7, in a further possible embodiment of the present invention, can be replaced with a supporting element 7a (figure 4) for the ribbon-like filtering element 8. The lower face 7b of said supporting element is substantially curved, and said supporting element is supported by the frame 6 in a fixed manner.

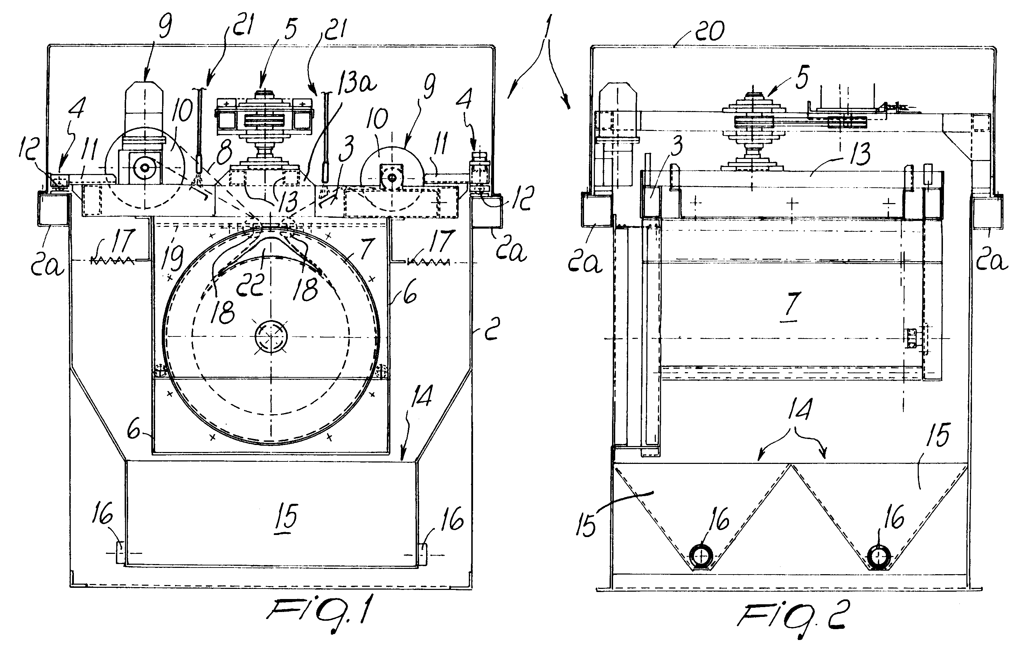

For each corner of the lattice 3, said resting means 4 are constituted either by a corresponding cantilevered arm 11, on the free end of which a respective spheroidal element 12 is mounted and is slideable to a limited extent while simply resting on the edge 2a of the vat 2; or by a cylindrical head 12a having its axis arranged vertically and being snugly insertable in a corresponding box-like seat 12b supported by the arm 11, with the interposition of a helical compression spring 12c (figure 3).

The elements for connection to the vibrating unit 5 of the lattice 3 are constituted by a pair of horizontal cross-members 13 on which the vibrating unit rests; the ends of said cross-members are rigidly coupled to respective plates 13a which are vertically rigidly coupled to said lattice 3.

The collection vat 2 is provided, on its bottom, with elements 14 for accumulating and conveying the collected impurities; said elements are preferably constituted by a pair of hoppers 15 arranged side by side and having inlet and outlet openings 16 at their bottom ends; they can furthermore be integrated with an extraction means, however not shown in the drawings since it is of a known type.

Between the frame 6 and the vat 2 there are helical springs 17 the ends whereof are coupled to said elements; said springs constitute said elastic damping elements.

The filtering ribbon 8 is kept guided by a pair of guiding pulleys 18 facing each other and provided with known cleaning brushes.

The vat 2 can furthermore be provided with a sealing cover 20.

The operation of the dynamic filter according to the present invention is as follows: the inside of the collection vat 2 is subjected constantly to an overpressure generated by the hydrostatic force, by using the introduction force of the fluid and also by subjecting said vat to pressure artificially by introducing compressed air in it and closing, in this case, the frame 6 with the diaphragm 19, as well as by applying a related sealed lid 20 above the vat 2, or by arranging a screen 22 between the winding/unwinding arms of the ribbon 8; said screen rests on the upper portion of the drum 7.

The fluid to be treated is introduced through the inlet opening 16: if it is in the liquid state, a constant level is reached and maintained in the vat 2 so that said fluid statically presses on the outer surface of the drum 7, on which a portion of the filtering ribbon 8 is wound; or, in order to improve the filtering power while keeping the flow-rate constant, an overpressure is produced which forces the fluid to pass at right angles through the fibers of the ribbon 8 and flow, after being purified, to the center of the drum 7, from where it is drawn to be reused.

During the filtering process, the vibrating unit 5 causes the oscillation, along a spherical path, of the entire structure comprising the frame 6 and the drum 7 supported thereby: this oscillation, which is variable in intensity, frequency and direction, allows to prevent the accumulation of the impurities on the active portion of the ribbon 8 wound on the drum 7, thus preventing the forming of the so-called "cake" or controlling its consistency: in fact, when using filtering agents constituted by fossil flours, which must deposit on the ribbon 8 before the impurities and remain stuck on it for a given thickness in order to be effective, by acting on the frequency of the oscillations it is possible to form a sort of thin cake with filtering functions, keeping its thickness constant and fixed.

However, normally the forming of the layer accumulated on the ribbon 8 is to be avoided, thus extending the life of said ribbon.

The oscillations of the frame 6 are damped by the springs 17, and since said oscillations follow a spherical path, the planar projection of the filtering meshes decreases in absolute terms, reducing the useful surface for the passage of impurities and generating tangent force components which repel the impurities having such dimensions as to be instead able to pass between the fibers in static conditions.

The ribbon 8 is movable both in a single direction and bidirectionally, by winding and unwinding alternatively on the reels 9 and 10; upstream of said reels there are also devices 21 for washing the filtering ribbon 8 if said ribbon has a relatively wide mesh.

The spheroidal elements 12 furthermore allow the lattice 3 to follow the planar oscillations and, although moderately, the vertical oscillations imparted to it by the unit 5.

The impurities which have fallen onto the bottom of the vat 2 are collected in the hoppers 15 and are sent outside by them through the related openings 16, possibly aided by an extractor accommodated in said hoppers.

If the fluid to be treated is in the gaseous state, the filtering process is substantially the one described above and in this case, too, it occurs by making the flow pass through the drum 7 from the outside inwards or, more appropriately, towards the center of said drum, from which it is drawn and sent to recirculation.

In practice it has been observed that the present invention thus described achieves the intended aim and objects.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Dynamic filter (1) for treating fluids containing solid-phase contaminants, comprising an impurity collection vat (2) supporting, on its upper mouth and with resting means (4) interposed, a substantially flattened lattice (3) connected, by virtue of related elements (13,13a), to a vibrating unit (5) in an upward region and supporting, in a downward region, a frame (6) for supporting, inside the vat and with interposed elastic damping elements (17), a supporting element (7;7a) on a face whereof a ribbonlike filtering element (8) of preset porosity can be wound so that it rests thereon and is moved bidirectionally by related elements (9); said collection vat being provided with elements (14) for accumulating and conveying outside the collected impurities.

2. Dynamic filter according to claim 1, characterized in that in said supporting element at least the face (7b) considered lower in the configuration for use is substantially curved.

3. Dynamic filter according to claims 1 and 2, characterized in that said supporting element is constituted by a drum (7) having a horizontal axis, the rotation whereof can be blocked.

4. Dynamic filter according to claim 1, characterized in that said elements for connecting the lattice to the vibrating unit are constituted by a pair of horizontal cross-members (13), on which said unit rests; the ends of said cross-members being rigidly coupled to related vertical connecting plates (13a) rigidly coupled to the lattice.

5. Dynamic filter according to claim 1, characterized in that said vibrating unit (5) moves the lattice along a substantially spherical path.

6. Dynamic filter according to claim 1, characterized in that said elastic resting means comprise, for each corner of the lattice, corresponding cantilevered arms (11) at the free end of which there are retention elements with two degrees of freedom, such as a simple truck.

7. Dynamic filter according to claim 6, characterized in that each one of said retention elements with two degrees of freedom comprises a cylindrical head (12a) inserted in a corresponding hollow box-like seat (12b) with a helical compression spring interposed (12c).

8. Dynamic filter according to claim 1, characterized in that said damping elements comprise a plurality of helical traction springs (17), the ends of which are coupled respectively to the vat (2) and to the drum supporting frame (6).

9. Dynamic filter according to claim 1, characterized in that said elements for the bidirectional movement of the filtering ribbon are constituted by at least one pair of reels (10), at least one of which is motorized and one is driven, said reels being mounted on elements for automatically applying tension to the ribbon-like element, being located above said lattice and having rotation axes parallel to the axis of the drum; and by a pair of guide pulleys (18) which stretch the arms of the ribbon, which are supported directly above said drum and which are optionally sealingly inserted in a diaphragm (19) for the upward closure of the supporting frame.

10. Dynamic filter according to claim 9, characterized in that said tension application elements are constituted by respective torsion springs coaxially inserted on the rotation axes of the reels and pre-loaded.

11. Dynamic filter according to claim 1, characterized in that said elements accumulating and conveying the collected impurities are constituted by one or more pairs of hoppers (15) having parallel axes, said hoppers being arranged side by side on the bottom of the collecting vat and being affected, at their bottom ends, by respective inlet and outlet openings (16) which are optionally aided by an extraction means.

12. Dynamic filter according to claim 1, characterized in that the oscillation generated by said vibrating unit produces a dynamic narrowing of the useful passage openings of the pores of the filtering ribbon projected on an ideal tangent plane, generating an equally tangent thrust component suitable to repel impurities smaller than said pores of the ribbon.

13. Dynamic filter according to claims 1, 2 and 3, characterized in that said vat is sealingly closeable in an upward region with a related covering (20) suitable to allow pressurization of said vat.

14. Dynamic filter according to claim 13, characterized in that in said pressurized vat the upper portion of the drum is provided with a shaped sealing screen (22) the ends of which are in sliding contact with the arms of said ribbon-like filtering element which are superimposed on said ends.

## Patentansprüche

1. Dynamischer Filter (1) zur Behandlung von Feststoff-Verunreinigungen enthaltenden Fluiden, umfassend eine Verunreinigungs-Sammeltonne (2), die an ihrer oberen Öffnung und mit zwischengeordneten Stützmitteln (4) ein im wesentlichen flaches Gitter (3) trägt, das mittels entsprechender Elemente (13, 13a) in einem oberen Bereich mit einer Vibrationseinheit (5) verbunden ist und das in einem unteren Bereich einen Rahmen (6) trägt, um innerhalb der Tonne und mit zwischengeordneten elastischen dämpfenden Elementen (17) ein Stützelement (7; 7a) mit einer Fläche zu tragen, auf die ein bandähnliches Filterelement (8) einer vorgegebenen Porosität wickelbar ist, so daß es darauf lagert und durch entsprechende Elemente (9) in zwei Richtungen bewegt wird; wobei die Sammeltonne mit Elementen (14) versehen ist, um die gesammelten Verunreinigungen zu speichern und nach außen zu fördern.

2. Dynamischer Filter nach Anspruch 1, dadurch gekennzeichnet, daß bei dem Stützelement wenigstens die Fläche (7b), die bei der Gebrauchstellung als die untere betrachtet wird, im wesentlichen gebogen ist.

3. Dynamischer Filter nach Anspruch 1 und 2, dadurch gekennzeichnet, daß das Stützelement von einer Trommel (7) gebildet ist, die eine horizontale Achse aufweist und deren Drehung hemmbar ist.

4. Dynamischer Filter nach Anspruch 1, dadurch gekennzeichnet, daß die Elemente zum Verbinden des Gitters mit der Vibrationseinheit von einem Paar von horizontalen Quergliedern (13) gebildet ist, auf denen die Einheit lagert; wobei die Enden der Querglieder starr an entsprechenden vertikalen Verbindungsplatten (13a) angebracht sind, die starr an dem Gitter angebracht sind.

5. Dynamischer Filter nach Anspruch 1, dadurch gekennzeichnet, daß die Vibrationseinheit (5) das Gitter entlang einem im wesentlichen kugeligen Weg bewegt.

6. Dynamischer Filter nach Anspruch 1, dadurch gekennzeichnet, daß die elastischen Stützmittel für jede Ecke des Gitters entsprechende freitragende Arme (11) aufweisen, an deren freiem Ende Halteelemente mit zwei Freiheitsgraden, so wie ein einfaches Laufrad, sind.

7. Dynamischer Filter nach Anspruch 6, dadurch gekennzeichnet, daß jedes der mit zwei Freiheitsgraden versehenen Halteelemente einen zylindrischen Kopf (12a) aufweist, der in einen entsprechenden hohlen, kastengleichen Sitz (12b) eingefügt ist, wobei eine wendelförmige Druckfeder zwischengeordnet (12c) ist.

8. Dynamischer Filter nach Anspruch 1, dadurch gekennzeichnet, daß die dämpfenden Elemente eine Vielzahl von wendelförmigen Zugfedern (17) umfassen, deren Enden entsprechend an der Tonne (2) und an dem trommeltragenden Rahmen (6) angebracht sind.

9. Dynamischer Filter nach Anspruch 1, dadurch gekennzeichnet, daß die Elemente für die Bewegung des filternden Bandes in zwei Richtungen von mindestens einem Paar von Rollen (10) gebildet sind, von denen mindestens eine motorgetrieben und eine getrieben ist, daß die Rollen an Elementen, um selbsttätig Zug auf die bandähnlichen Elemente aufzubringen, montiert sind, oberhalb des Gitters angeordnet sind und zu der Achse der Trommel parallele Achsen aufweisen; und daß die Elemente von einem Paar von Führungsrollen (18) gebildet sind, die die Arme des Bandes dehnen, die unmittelbar oberhalb der Trommel getragen sind und die fakultativ dichtend in eine Scheidewand (19) für den oberen Abschluß des tragenden Rahmens eingesetzt sind.

10. Dynamischer Filter nach Anspruch 9, dadurch gekennzeichnet, daß die zugaufbringenden Elemente von entsprechenden Drehfedern gebildet sind, die auf die Drehachsen der Rollen koaxial aufgesetzt und vorgespannt sind.

11. Dynamischer Filter nach Anspruch 1, dadurch gekennzeichnet, daß die Elemente zum Speichern und Fördern der gesammelten Verunreinigungen von einem oder mehr Paaren von Trichtern (15) mit parallelen Achsen gebildet sind und daß die Trichter Seite an Seite auf dem Boden der Sammeltonne angeordnet sind und an ihren bodenseitigen Enden durch entsprechende Einlaß- und Auslaßöffnungen (16) betroffen sind, die fakultativ durch ein Ausziehmittel unterstützt sind.

12. Dynamischer Filter nach Anspruch 1, dadurch gekennzeichnet, daß die durch die Vibrationseinheit erzeugte Oszillation ein dynamisches Verringern der brauchbaren Durchgangsöffnungen der Poren des filternden Bandes bewirkt, wobei bezogen auf eine ideale Berührungsebene eine gleichberührende Schubkomponente, die zum Abweisen von Verunreinigungen geeignet ist, die kleiner als die Poren des Bandes sind, erzeugt wird.

13. Dynamischer Filter nach Anspruch 1, 2 und 3, dadurch gekennzeichnet, daß die Tonne in einem oberen Bereich mittels einer zugeordneten Abdeckung (20) dichtend verschließbar ist, die ein Unterdrucksetzen der Tonne erlaubt.

14. Dynamischer Filter nach Anspruch 13, dadurch gekennzeichnet, daß in der unter Druck gesetzten Tonne der obere Teil der Tonne mit einem geformten Dichtschirm (22) versehen ist, dessen Enden in gleitender Berührung mit den Armen des bandähnlichen Filterelements ist, die den Enden übergeordnet sind.

## Revendications

1. Filtre dynamique (1) pour traiter des fluides contenant des contaminants en phase solide, comprenant une cuve de récupération des impuretés (2) soutenant, sur son ouverture supérieure et avec des moyens formant appui (4) interposés, une poutrelle en treillis sensiblement aplatie (3) reliée, par l'intermédiaire d'éléments en relation (13, 13a), à une unité vibrante (5) dans une zone orientée vers le haut et soutenant, dans une zone orientée vers le bas, un châssis (6) destiné à supporter, à l'intérieur de la cuve et avec des éléments amortisseurs élastiques (17) interposés, un élément de support (7 ; 7a) sur une face duquel un élément filtrant semblable à un ruban (8) d'une porosité préétablie peut être enroulé, de sorte qu'il repose sur celui-ci et qu'il soit déplacé de manière bidirectionnelle par les éléments en relation (9) ; ladite cuve de récupération étant munie d'éléments (14) pour accumuler et transporter vers l'extérieur les impuretés récupérées.

2. Filtre dynamique selon la revendication 1, caractérisé en ce que, dans ledit élément de support, au moins la face (7b) considérée inférieure dans la configuration destinée à l'utilisation est sensiblement incurvée.

3. Filtre dynamique selon les revendications 1 et 2, caractérisé en ce que ledit élément de support se compose d'un tambour (7) ayant un axe horizontal, dont la rotation peut être bloquée.

4. Filtre dynamique selon la revendication 1, caractérisé en ce que lesdits éléments destinés à relier la poutrelle en treillis à l'unité vibrante se composent de deux entretoises horizontales (13), sur lesquelles ladite unité repose ; les extrémités desdites entretoises étant couplées de façon rigide aux plaques de connexion verticales correspondantes (13a) qui sont couplées de façon rigide à la poutrelle en treillis.

5. Filtre dynamique selon la revendication 1, caractérisé en ce que ladite unité vibrante (5) déplace la poutrelle en treillis le long d'une trajectoire sensiblement sphérique.

6. Filtre dynamique selon la revendication 1, caractérisé en ce que lesdits moyens élastiques formant appui comprennent, pour chaque coin de la poutrelle en treillis, des bras encastrés correspondants (11) à l'extrémité libre desquels se trouvent des éléments de rétention avec deux degrés de liberté, tels qu'un simple chariot.

7. Filtre dynamique selon la revendication 6, caractérisé en ce que chacun desdits éléments de rétention à deux degrés de liberté comprend un corps cylindrique (12a) inséré dans un logement (12b) creux correspondant semblable à une boîte avec un ressort hélicoïdal de compression (12c) interposé.

8. Filtre dynamique selon la revendication 1, caractérisé en ce que lesdits éléments amortisseurs comprennent une pluralité de ressorts hélicoïdaux de traction (17), dont les extrémités sont couplées respectivement à la cuve (2) et au châssis (6) supportant le tambour.

9. Filtre dynamique selon la revendication 1, caractérisé en ce que lesdits éléments pour le mouvement bidirectionnel du ruban de filtrage se composent d'au moins deux enrouleurs (10), dont l'un au moins est motorisé et l'autre est entraîné, lesdits enrouleurs étant montés sur des éléments destinés à appliquer automatiquement une tension à l'élément semblable à un ruban, et étant situés au-dessus de ladite poutrelle en treillis et ayant des axes de rotation parallèles à l'axe du tambour ; et se composent de deux poulies de guidage (18) qui étirent les extrémités du ruban, qui sont supportées juste au-dessus dudit tambour et qui sont, de manière facultative, insérées de façon étanche dans un diaphragme (19) pour la fermeture vers le haut du châssis de support.

10. Filtre dynamique selon la revendication 9, caractérisé en ce que lesdits éléments d'application de tension se composent de ressorts de torsion respectifs insérés de manière coaxiale sur les axes de rotation des enroulements et pré-chargés.

11. Filtre dynamique selon la revendication 1, caractérisé en ce que lesdits éléments accumulant et transportant les impuretés recueillies se composent d'une ou plusieurs paires de trémies (15) ayant des axes parallèles, lesdites trémies étant agencées côte à côte sur le fond de la cuve de récupération et étant munies, à leurs extrémités inférieures, d'ouvertures d'entrée et de sortie respectives (16) qui sont éventuellement assistées par des moyens d'extraction.

12. Filtre dynamique selon la revendication 1, caractérisé en ce que l'oscillation générée par ladite unité vibrante produit un rétrécissement dynamique des ouvertures de passage utiles des pores du ruban de filtrage projeté sur un plan tangent idéal, ce qui génère une composante de poussée également tangente adaptée pour repousser les impuretés plus petites que lesdits pores du ruban.

13. Filtre dynamique selon les revendications 1, 2 et 3, caractérisé en ce que ladite cuve peut être fermée de façon étanche dans une région orientée vers le haut avec un couvercle correspondant (20) approprié pour permettre la pressurisation de ladite cuve.

14. Filtre dynamique selon la revendication 13, caractérisé en ce que, dans ladite cuve sous pression, la partie supérieure du tambour est munie d'un écran d'étanchéité (22) formé, dont les extrémités sont en contact coulissant avec les extrémités dudit élément de filtrage semblable à un ruban qui sont superposées sur lesdites extrémités.
